# EUROPEAN PATENT SPECIFICATION

(11) **EP 2 302 252 B1**
(45) Date of publication and mention of the grant of the patent: **28.11.2012**
(21) Application number: 09170713.3
(22) Date of filing: 18.09.2009
(51) Int. Cl.: F16F 9/49, F16F 9/58

(54) **Shock absorber with a hydraulic rebound stop**
Dämpfer mit hydraulischem Zuganschlag
Amortisseur avec butée hydraulique de rebond

(43) Date of publication of application: 30.03.2011
(73) Proprietor: BWI Company Limited S.A., 1628 Luxembourg (LU)
(72) Inventor: Krazewski, Olaf, 34-120 Andrychow (PL); Widla, Waldemar, 31-636 Krakow (PL); Slusarczyk, Pawel, 32-400 Myslenice (PL)
(74) Representative: Fox-Male, Nicholas Vincent Humbert

(56) References cited:
- EP-A1- 0 565 832
- EP-A2- 1 277 985
- DE-A1- 10 317 190
- DE-A1-102005 009 762
- US-A- 3 175 645

## Description

### TECHNICAL FIELD

This invention relates to a hydraulic shock absorber that can be used in an automotive vehicle or a motorcycle, and more particularly to a hydraulic rebound stop.

### BACKGROUND OF THE INVENTION

Hydraulic shock absorbers are conventionally designed such that the damping rate provided by the shock absorber becomes higher at the extreme ends of the rebound and compression strokes. The additional damping provided at the extreme ends prevent an abrupt halt of the piston rod travel as well as jarring metal to metal contact between the various parts in the shock absorber. A variety of mechanisms have been proposed to provide a higher damping rate at the two extreme. For example WO2005/106282 proposes a hydraulic rebound stop, called HRS, consisting of a hydraulic damper coaxially assembled inside the extension chamber of the shock absorber and only operating when the shock absorber is reaching full extension. Such device comprises a HRS-tube fixed inside the tube of the shock absorber. The HRS tube is provided with a chamfered entry and a HRS matching piston assembled on the main rod. The HRS-piston is externally provided with an annular groove in which is positioned an annular elastic open ring that can freely slide axially on the HRS-piston between the two flanges of the groove, the axial displacement of the ring in the groove being forced by the fluid travelling in opposite directions when the shock absorber extends or compresses. The ring itself is provided with large passages especially designed so that, in compression the ring being in abutment against a first flange of the groove, the passages are open enabling an easy travel through of the fluid and, in extension the ring being in abutment against the opposite flange, the passages are sealed by this flange forbidding a transfer back of the fluid.

Under normal circumstances, when the shock absorber operates away from the full extension position, the HRS-piston is outside the HRS-tube and the HRS does not operate. When the shock absorber approaches full extension, the HRS-piston penetrates the HRS-tube through its chamfered opening, therefore putting under pressure some hydraulic fluid in a HRS-chamber. The elastic open ring, fitted to the tube, slides in circular contact inside the tube, still being in abutment against the flange of the groove sealing the fluid passages. As the ring is open, the two ends of the ring face each other creating a calibrated exit for the fluid. This calibrated exit is the only way through which the fluid put under pressure in the HRS-chamber can exit back into the main chamber of the shock absorber, therefore providing additional damping to the final displacement of the piston-rod. At end of travel, the final halt is provided by a rubber cushion that is either fixed on the piston or in the main tube. It avoids metal to metal contact at full extension. When compressing back, the ring travel in the groove in abutments against the opposite flange, opening the large fluid passage cancelling any additional damping function.

This device and other similar solutions acting as one-way valves thanks to various orifices provided in the HRS-piston are no longer matching the expectations of the market. The additional damping provided by the HRS when approaching end of travel is constant and determined by the cross section of the calibrated exit. Further more, to prevent the metal to metal final contact a rubber cushion is still mandatory. This adds components and complexity.

### SUMMARY OF THE INVENTION

The present invention provides an absorber as defined in claim 1. The absorber may include the features of any one or more oof dependent claims 2 to 13.

The object of the present invention is to resolve these problems by proposing a hydraulic shock absorber equipped with a hydraulic rebound stop, called HRS, providing end of travel damping which follows a variable function, tunable to the desire of the designer. Additionally the present invention eliminates the need for any cushion-type device to avoid metal to metal internal contact at end of travel, this simplifying the manufacturing and assembly while improving reliability and reducing overall cost.

The present invention is a linear Hydraulic shock absorber comprising a main tube defining a main chamber filled with a fluid, a piston with a rod axially extending through an extension extremity of the main tube, the piston being slidably mounted in the main chamber and operating in a compression mode and in extension mode between a full extension axial position and a full compression axial position. The shock absorber is further provided with a hydraulic rebound stop, called HRS, placed in the main tube and comprising, a HRS-tube fixed to the main tube, the HRS-tube having a wall provided with an inner surface called HRS-tube-inner-surface, and a HRS-piston adjusted to the HRS-tube-inner-surface and mounted on the rod. When the shock absorber is in the extension mode and approaching the Full Extension position, the HRS-piston enters into the HRS-tube via the HRS-tube-in to put under pressure the fluid between the extension extremity of the HRS-tube and the HRS-piston, this phase of higher compression being called HRS-damping phase. The HRS is further provided with fluid-exit means for providing to the fluid put under pressure inside the HRS-tube a way out to the main chamber.

Additionally, the HRS comprises means for varying the HRS-damping level during the HRS-damping phase. This is achieved by varying the fluid output. The relative axial position of the HRS-piston with regards to the HRS-tube determines the fluid output throughout the fluid-exit means.

Advantageously, the means provide a continuous increase of the damping level during the HRS-damping phase.

More specifically, the fluid exit means are arranged in the cylindrical wall of the HRS-tube and are extending from the HRS-tube-in toward the inside of the HRS-tube.

The HRS is further provided with fluid inlet means which are open, thus enabling the fluid to transfer from the main chamber to the inside of the HRS-tube when the shock absorber is in the compression mode. The fluid inlet means are closed, thus forbidding the fluid to transfer from the main chamber to the inside of the HRS-tube, when the shock absorber is in the extension mode. Furthermore, the fluid inlet means are in the HRS-piston.

More specifically, the fluid inlet means comprise at least one hole. Also, the HRS-piston is slidably mounted on the rod between a compression stop surface and an extension stop surface. When the shock absorber is in the compression mode the HRS-piston axially translates in abutment against the compression stop surface which leaves the hole open. When the shock absorber is in the extension mode the HRS-piston axially translates in abutment against the extension stop surface which closes the hole.

Furthermore, the HRS-piston is provided with an inner radial shoulder forming a recess so that in the compression mode the HRS-piston is in abutment against the compression stop surface at the bottom of the recess.

Advantageously, to obtain a varying HRS-damping the fluid-exit means defines a cross section through which the fluid exits and that varies axially.

A further advantage of the present invention is that in the end portion of the HRS-tube there is no fluid exit means so that the shock absorber reaches its maximum extension prior to any internal metal to metal contact as some fluid is trapped and can not exit.

Also, the HRS-tube-in is provided with a chamfer, so the entry of the HRS-piston inside the HRS-tube is guided.

An-other embodiment possible the HRS-tube comprises a plurality of fluid-exit means having different length. This can advantageously facilitate the manufacturing of the HRS-tube.

Also, the fluid-exit means can comprise at least one groove axially operated in the HRS-wall and extending from the HRS-tube-in toward the inside of the HRS-tube, the groove having a larger cross section by the HRS-tube-in than further inside the HRS-tube.

A further possible embodiment is that the fluid-exit is an annular gap between the HRS-tube-inner-surface and the HRS-piston-outer surface. The HRS-tube-inner-surface is tapered and larger by the HRS-tube-in thus varying the cross section of the annular gap as the HRS-piston engages further inside the HRS-tube.

Alternatively, a cavity can be operated between the main tube and the HRS-tube. The cavity leads to the extension chamber. So, the fluid exit means comprise at least one through hole operated in the HRS-wall and connecting the inside of the HRS-tube to the cavity. In this configuration, the fluid exit to the extension chamber via the hole then the cavity.

Advantageously, for manufacturing easiness, as the HRS-tube is fixed to the main tube, it can as well be integral to the main tube.

### BRIEF DESCRIPTION OF THE DRAWINGS

Other advantages of the present invention will be readily appreciated as the same becomes better understood by reference to the following detailed description when considered in connection with the accompanying figures wherein:
Figure 1 is a vehicle suspension system in full compression.
Figure 2 is a vehicle suspension system in full extension.
Figure 3 is an erection view with internal details of the shock absorber.
Figure 4 is a section S1 of the HRS-tube.
Figure 5 is a section S2 of the HRS-tube.
Figure 6 is a section of the shock absorber under compression.
Figure 7 is a section of the shock absorber approaching full extension.
Figure 8 is a section of the HRS while extending.
Figure 9 is a section S3 of the HRS.
Figure 10 is a view linking the HRS-tube to the HRS-damping.
   Fig. 10a is a section of the HRS-tube.
   Fig. 10b is a plot of the cross section of a groove along axis A.
   Fig. 10c is a plot of the HRS-damping along axis A.
Figure 11 is view of a HRS-tube provided with conical slots.
Figure 12 is view of a HRS-tube provided with slots of various lengths.
Figure 13 is section of a HRS with a cavity and holes in the HRS-tube.
Figure 14 is section of a conical HRS-tube.
Figure 15 is section of a HRS-tube integral to the main tube.

### DESCRIPTION OF THE PREFERRED EMBODIMENT

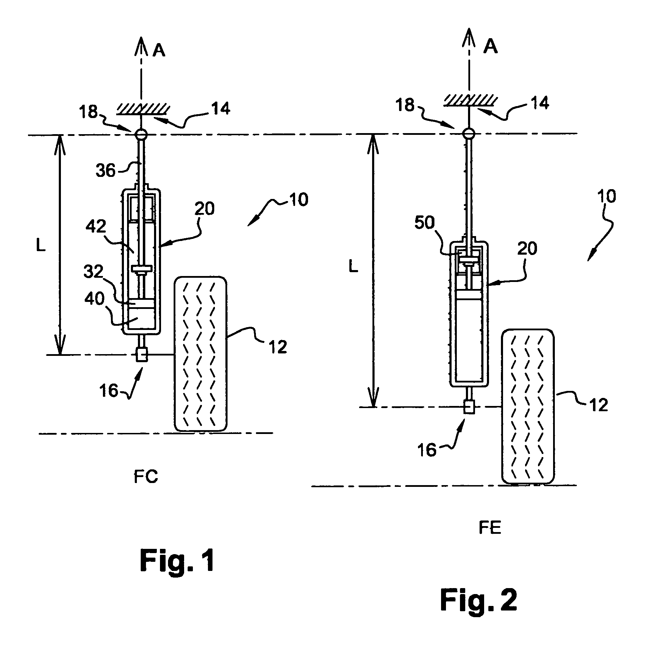

Figure 1 and Figure 2 represent a suspension system of a vehicle 10 comprising a shock absorber 20 joining a wheel knuckle 12 or suspension arm to the car body 14 along an axis A. The shock absorber 20 has an overall length L ranging from a bottom mounting point 16 attached to the suspension arm or to the wheel knuckle 12, to an upper mounting point 18, called body end 18, attached to the car body 14. In Figure 1, the system is represented in a Full Compression FC position, the shock absorber 20 is at its shortest length L the wheel 12 being the closest possible to the car body 14. In Figure 2 the system is represented in a Full Extension FE position, the shock absorber 20 is at its longest length L the wheel 12 being at the furthest possible distance to the car body 14.

To ease the description, the axis A is oriented from the wheel 12 toward the car body 14.

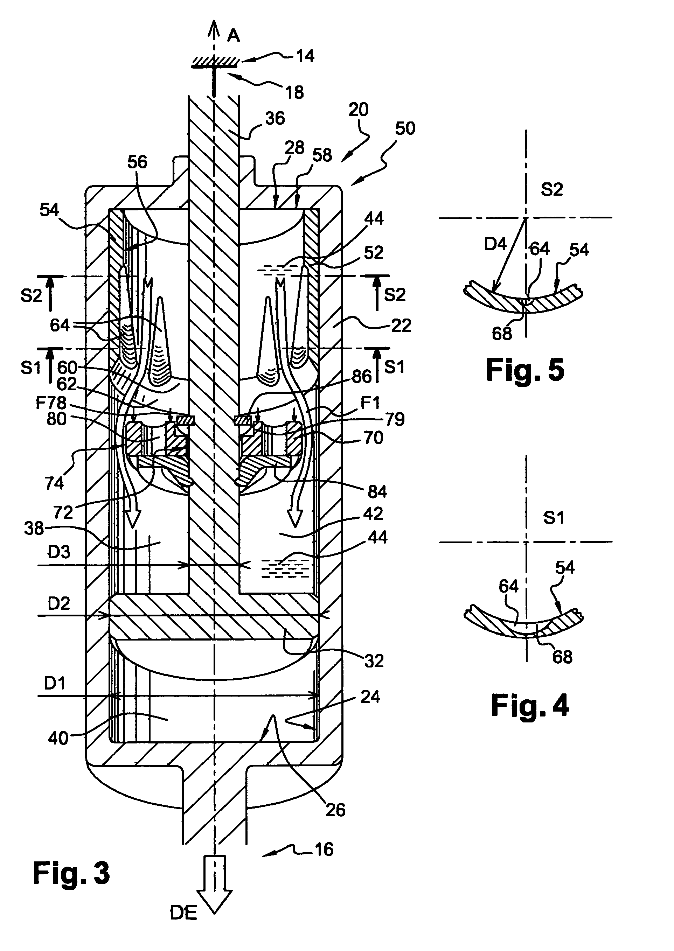

As generally presented by Figure 3, the hydraulic shock absorber 20 comprises a main tube 22 in which is axially slidably mounted, as per axis A, a piston 32 fixed at an extremity of a rod 36. The rod 36 axially extends out of the main tube 22 toward the car body 14 where it is attached.

The main tube 22 is internally limited by an inner cylindrical surface 24 defining a main chamber 38, the inner cylindrical surface 24 having an inner diameter D1. The piston 32 has an outer cylindrical surface 74 diameter D2 matching the inner diameter D1. The rod 36 has a rod diameter D3.

The piston 32 divides the main chamber 38 in a compression chamber 40 having a compression extremity 26 by the wheel end 16, and an extension chamber 42 having an extension extremity 28 by the body end 18. The compression extremity 26 is closed. The extension extremity 28 is holed for the rod 36 to extend out to the car body 14. A sealing system (not represented) seals the extension extremity 28 around the rod 36. The main tube 22 is filled with hydraulic fluid 44. When the length L of the shock absorber 20 varies, the piston 32 axially translates inside of the main tube 22 pressurizing the fluid 44 in the chambers 40 and 42 thus amortizing the displacements of the wheel 12 relative to the car body 14.

This description is based on a mono-tube shock absorber 20 where in the main cylinder 22 the volume compensation is done thanks to the compression of a gas through a floating gas-cap (not represented) that closes the main cylinder 22. The present invention can as well be implemented in a twin-tube shock absorber 20 where the main cylinder 22 comprises an external tube and an internal tube closed by a base valve (not represented) so the fluid 44 inside the shock absorber 20 can transfer from one chamber to the other, 40 42, as the piston 32 translates inside the main tube 22 through, for instance, a controlled bypass (not represented) between the rod 36 and the rod guide.

Inside the main tube 22, at the extension extremity 28 is placed a hydraulic rebound stop 50, called HRS 50.

The HRS 50 comprises a tube 52, called HRS-tube 52, a piston 70, called HRS-piston 70, a stop 84, called Rebound-stop 84 and a ring 86, called HRS-ring 86.

The HRS-tube 52 is fixed inside the main tube 22 at the extension extremity 28. The HRS-tube 52 has a wall 54, called HRS-wall 54, with an inner surface 56, called HRS-tube-inner-surface 56, having a diameter D4, called HRS-tube-inner-diameter D4, smaller than the inner diameter D1. The HRS-tube 52 extends axially from a bottom end 58, called HRS- bottom-end 58 positioned against the extension extremity 28 of the main tube 22 and holed to enable the rod 36 to extend out, to an opening 60, called HRS-tube-in 60 oriented toward the compression extremity 26 and provided with a chamfer 62. The HRS-tube 52 is further provided with grooves 64 operated in the HRS-wall 54. The grooves 64 extend axially from the HRS-tube-in 60 toward the HRS-bottom-end 58. The grooves 64 end before reaching the HRS-bottom-end 58. Each groove 64 has a cross section 68. As represented Figure 3 and detailed in Figure 4 (section S1) and Figure 5 (section S2) the cross section 68 is larger by the HRS-tube-in 60 (section S1) and continuously diminishes as measured in the vicinity of the HRS-bottom-end 58 (Section S2).

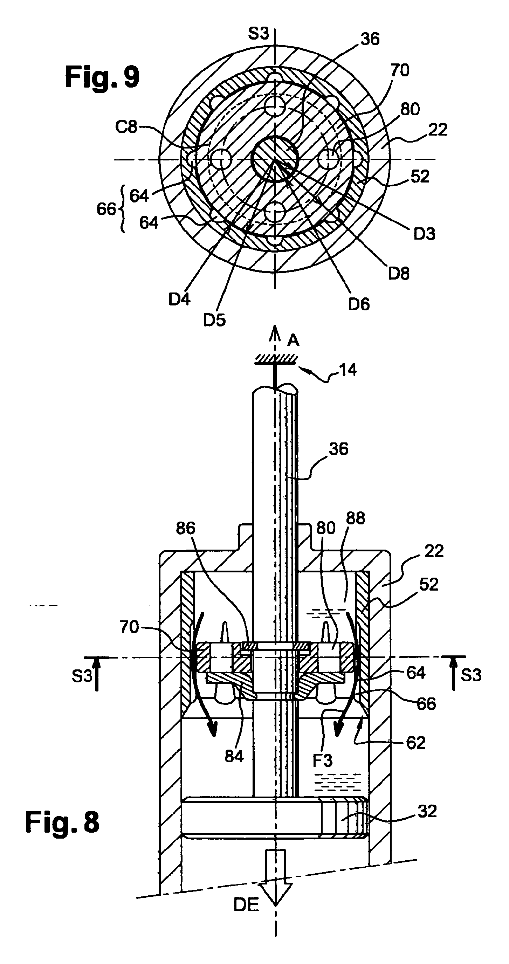

The HRS-piston 70 has the geometry of a thick-disc with an inner cylindrical surface 72 and an outer cylindrical surface 74 and two parallel faces 76 78, identified as the stop-face 76 and the ring-face 78 extending from the inner cylindrical surface 72 to the outer cylindrical surface 74. The ring-face 78 is provided with an inner radial shoulder forming a recess 79 adjacent to the inner cylindrical surface 72. The inner cylindrical surface 72 has a diameter D6, called HRS-piston-in-diameter D6, larger than the rod diameter D3. The outer cylindrical surface 74 has a diameter D5, called HRS-piston-out-diameter D5, adjusted and smaller than the HRS-tube-inner-diameter D4. The HRS-piston 70 is further provided with at least one through passage 80, called fluid-in 80, connecting the stop-face 76 to the ring face 78. In the stop-face 76, the opening of the fluid-in 80 is entirely comprised inside a circle C8 of axis A and diameter D8, called C-diameter D8, (Figure 9).

The HRS-piston 70 is mounted on the rod 36 and, the difference between the HRS-piston-in-diameter D6 and the rod diameter D3 enables the HRS-piston 70 to freely axially translate along the rod 36 and enables compensation of the radial misalignments between the HRS-piston 70, the rod 36 and the HRS-tube 52. The HRS-piston 70 is placed between a stop 84, called rebound-stop 84, and a ring 86, called HRS-ring 86, both fixed to the rod 36. The rebound-stop 84 is closer to the piston 32 than the HRS-ring 86. In position the stop-face 76 faces the rebound-stop 84 and the ring-face 78 faces the HRS-ring 86.

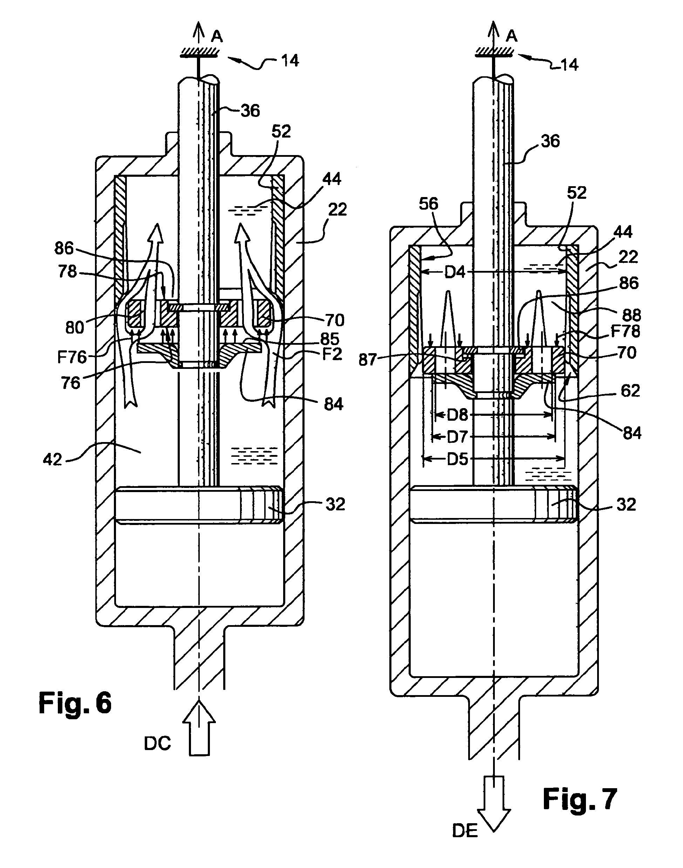

The rebound-stop 84 is a plain disc radially extending from the rod 36 to an outer diameter D7, called rebound-stop-diameter D7. As presented Figure 7, the rebound-stop-diameter D7 is smaller than the HRS-piston-out-diameter D5 and is larger than the C-diameter D8.

When the shock absorber 20 is away from the Full extension FE (Figure 2), in an intermediate position, as represented in Figures 3 and Figure 6, the HRS-piston 70 is outside of the HRS-tube 52.

Figure 3 represents the shock absorber 20 in extension mode ME as indicated by arrow DE. The fluid 44 in the extension chamber 42 applies an axially oriented force F78 on the ring-face 78 that pushes the HRS-piston 70 so its stop-face 76 lies in abutment against the extension-stop-surface 85 of the rebound-stop 84. The rebound-stop-diameter D7 being larger than the C-diameter D8, the fluid-in 80 is sealed by the extension-stop-surface 85. The fluid 44 can not flow through the fluid-in 80 and has no other alternative than to follow a flow F1 around the HRS-piston 70 between its outer cylindrical surface 74 and the main tube 22.

Figure 6 represent the shock absorber 20 in a compression mode MC, as indicated by arrow DC. The fluid 44 in the extension chamber 42 applies an axially oriented force F76 on the stop-face 76 that pushes the HRS-piston 70. The HRS-piston 70 slides on the rod 36 so the bottom of the recess 79 comes in abutment against the compression-stop-surface 87 of the HRS-ring 86, and the HRS-ring 86 is entirely inside the recess 79, the axial thickness of the HRS-ring 86 being smaller than the axial depth of the recess 79. This leaves the fluid-in 80 open and, the fluid 44 present in the extension chamber 42 can follow a flow F2 around the HRS-piston 70 between its outer cylindrical surface 74 and the main tube 22 as it can as well flow through the fluid-in 80.

The HRS-piston 70 acts as a one-way valve, opening the fluid-in 80 in compression and closing the fluid-in 80 in extension.

Figure 7 represents the HRS 50 configuration when the shock absorber 20 extends ME and approaches Full Extension FE. The HRS-piston 70 engages in the HRS-tube 52. The chamfer 62 facilitates this engagement. The HRS-piston-in-diameter D6 being larger than the rod diameter D3, the chamfer 62 guides the HRS-piston 70 into the HRS-tube 52. This enables a smooth entry avoiding blockages or hard abutment of the HRS-piston 70 against the HRS-tube 52.

A HRS-chamber 88, in which some fluid 44 in, is now formed inside the HRS-tube 52 and extends between the HRS-bottom-end 58 and the entering HRS-piston 70.

Figure 8 represents the HRS 50 configuration when the shock absorber 20 is in extension mode ME and extends further, above the stage illustrated in Figure 7. The HRS-piston 70 enters into the HRS-tube 52. The fluid 44 present in the HRS-chamber 88 is put under pressure and its only possible way out 66, called HRS-way-out 66, relies in the grooves 64 over the HRS-piston 70 through where the fluid 44 forces its way and follows a flow F3 into the extension chamber 42.

This generates a damping 90, called HRS-damping 90. The HRS-damping 90 superimposes to the damping normally provided by the shock absorber 20. The HRS-piston 70 is able to approach the HRS-bottom-end 58 as long as the fluid 44 put under pressure can exit the HRS-chamber 88. When the HRS-piston 70 reaches the end of the grooves 64 the fluid 44 remaining in the HRS-chamber 88 can still exit through bypasses (not represented) and between the outer-cylindrical surface 74 of the HRS-piston 70 and the HRS-tube-inner-surface 54 resulting from manufacturing tolerances.

The operating phase during which the HRS provides the HRS-damping 90 is called the HRS-damping-phase.

The force of the HRS-damping 90 is a function of the cross section of the HRS-way-out 66 through which the fluid 44 flows over the HRS-piston 70 (Figure 9 - section S3). The fluid 44 viscosity and the relative velocity of engagement of the HRS-piston 70 into the HRS-tube 52 influence as well the HRS-damping 90. Thanks to the variable cross section 68 of the grooves 64, the exit of the fluid 44 is easier at beginning of the HRS-damping-phase than at the end of the phase. This generates a variable force HRS-damping 90.

When extending at high velocity the extension of the shock absorber 20 is advantageously stopped before reaching internal metal to metal contact, as the grooves 64 end before reaching the HRS-bottom-end 58.

When extending at very low velocity the shock absorber 20 can further extend. The HRS-ring 86 is entirely hidden inside the recess 79. The fluid 44 present in the HRS-chamber 88 is able to exit through bypasses (not represented) and between the outer-cylindrical surface 74 of the HRS-piston 70 and the HRS-tube-inner-surface 54. The extension can proceed until metal to metal contact between the HRS-piston 70 going in abutment against the extension extremity 28 of the main tube 22. Therefore, the measured maximum extended length L of the shock absorber 20 is the same as for a standard shock absorber without HRS 50. When being under metal-to-metal contact, a force going from the rod 36 to the main tube 22 transmits through the HRS-piston 70 and not through the HRS-ring 86.

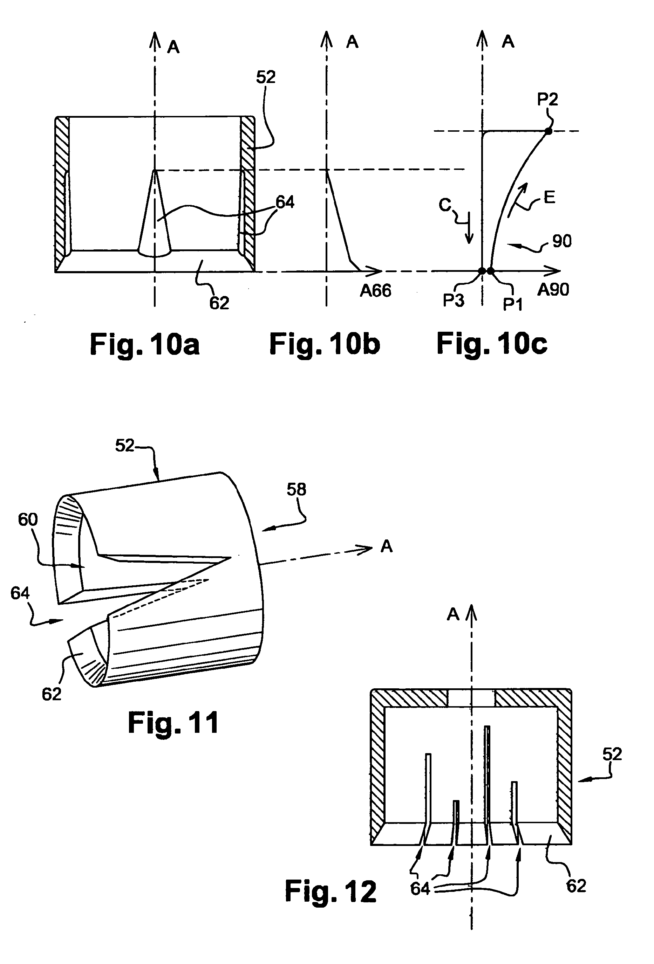

Figure 10 is a three part Fig. 10a, Fig. 10b and Fig. 10c. It illustrates a HRS-damping 90 as a function of the position of the HRS-piston 70 relative to the HRS-tube 52.

Fig. 10a is a section of the HRS 50 along the axis A (HRS-piston 70 not represented). The HRS-tube 52 is provided with variable section grooves 64 providing a variable HRS-way-out 66 reducing as entering into the HRS-tube 52.

Fig. 10b represents, in relation with Fig. 10a, the variation of the section of the HRS-way-out 66. On Fig. 10b is represented the position of the HRS-piston 70 inside the HRS-tube 52, along the longitudinal axis A, and the cross section of the HRS-way-out 66 along a transversal axis A66. The Fig. 10b indicates that the cross section of the HRS-way-out 66 decreases as the HRS-piston 70 further enters into the HRS-tube 52.

Fig. 10c represents the HRS-damping 90, in relation with Fig. 10a and Fig. 10b. The Fig. 10c is represented along the longitudinal axis A and a transversal axis A90 where can be determined the force of HRS-damping 90. In the system of axis A-A90, the HRS-damping curve has the shape of a loop with a path E followed in Extension during the HRS-damping-phase and a path C followed in Compression. One curve only is represented on the Fig. 10c as all other parameters are considered constant (viscosity and velocity).

The Fig. 10c is interpreted as follow:
From point P1 to point P2 following path E, the HRS-piston 70 penetrates the HRS-tube 52 and the force of HRS-damping 90 increases as HRS-way-out 66 decreases. The fluid-in 80 are closed.
From point P2 to point P3 following path C, the HRS-piston 70 exits the HRS-tube 52 and the HRS-damping 90 is minimal as the fluid-in 80 are open.

Several alternative embodiments of the present invention are now described.

Figure 11 is an-other embodiment of the present invention where the grooves 64 are replaced by V-shape slots 64 with large opening by the chamfer 62 and reducing as getting closer to the HRS-bottom-end 58. Preferably, the V-shape slots 64 are opened in the two cylindrical surfaces of the HRS-wall 54.

Figure 12 is an-other embodiment of the present invention. In the HRS-tube 52, the grooves 64 are replaced by straight slots 64 having different length. In this embodiment, the HRS-way-out 66 is determined by the number of slots 64 connecting the HRS-chamber 88 to the extension chamber 42. This number reduces as the HRS-piston 70 penetrates further into the HRS-tube 52, thus reducing the HRS-way-out 66 enabling a variable HRS-damping 90. Preferably, the slots 64 are opened in the two cylindrical surfaces of the HRS-wall 54.

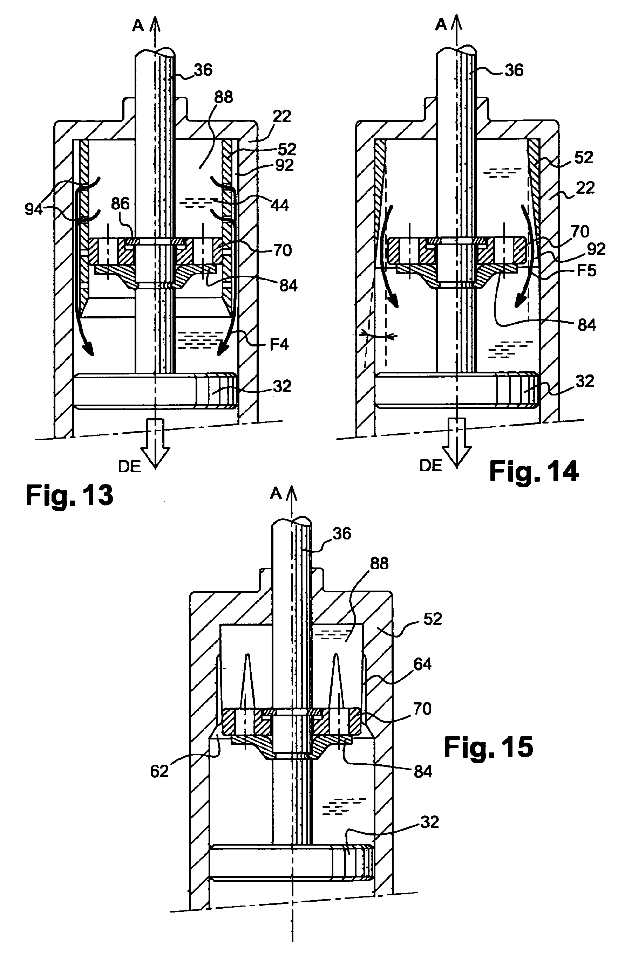

Figure 13 is an-other embodiment of the present invention. A cavity 92 extends between the main-tube 22 and the HRS-tube 52 from the extension chamber 42 toward the extension extremity 28. The HRS-tube 52 is further provided with a plurality of radial through-hole 94 connecting the HRS-chamber 88 to the cavity 92. The fluid 44 present in the HRS-chamber 88 can exit through these holes 94 in the cavity 92 and finally into the extension chamber 42, as indicated by arrow F4. In this embodiment, the HRS-way-out 66 is determined by the number of holes 94 where through the fluid 44 is able to exit. This number reduces as the HRS-piston 70 engages further into the HRS-tube 52. In this embodiment the cavity 92 can take various geometries such as a groove axially oriented, a plurality of grooves, or an annular clearance.

Figure 14 is an-other embodiment of the present invention. The HRS-tube 52 internal surface is conical, therefore the cross section of the HRS-way-out 66 decreases as the HRS-piston 70 engages into the HRS-tube 52. The fluid 44 passing through the HRS-way-out 66, as indicated by arrow F5, generates the HRS-damping 90.

Figure 15 is an-other embodiment of the present invention. The HRS-tube 52 is integral to the main tube 22. This can advantageously reduce the number of components and ease the manufacturing and assembly process.

Numerous different embodiments are possible to accommodate a HRS-piston 70 acting as a one way valve. For instance the HRS-piston 70 could be fixed on the rod 36 and provided with a check valve. The check valve can consist in a ball or a disc that closes a conical fluid-in 80 operated in the HRS-piston 70, when the shock absorber extends, and opens the fluid-in when the shock absorber 20 compresses. The check valve could as well comprise an elastic mean, such as a spring, to push in on the ball or the disc.

Also, the fluid-in 80 are described as holes. Alternatively, the fluid-in 80 can consist in notches operated in the inner cylindrical surface 72 and going from the stop-face 76 to the ring face 78.

## Claims

1. A linear Hydraulic shock absorber (20) comprising a main tube (22) defining a main chamber (38) filled with a fluid (44), a piston (32) with a rod (36) axially extending through an extension extremity (28) of the main tube (22), the piston (32) being slidably mounted in the main chamber (38) and operating in a compression mode (MC) and in extension mode (ME) between a full extension axial position (FE) and a full compression axial position (FC);
the shock absorber (20) being further provided with a hydraulic rebound stop (50), called HRS (50), placed in the main tube (22) and comprising:
a HRS-tube (52) fixed to the main tube (22), the HRS-tube (52) having a wall (54) provided with an inner surface (56) called HRS-tube-inner-surface (56), and
a HRS-piston (70) adjusted to the HRS-tube-inner-surface (56) and mounted on the rod (36) so that, when the shock absorber (20) is in the extension mode (ME) and approaching the Full Extension (FE) position, the HRS-piston (70) enters into the HRS-tube (52) via the HRS-tube-in (60) to put under pressure the fluid (44) between the extension extremity (58) of the HRS-tube (52) and the HRS-piston (70), this phase of higher compression being called HRS-damping phase;
the HRS (50) being further provided with fluid-exit means (64) for providing to the fluid (44) put under pressure inside the HRS-tube (52) a way out to the main chamber (38),
wherein the HRS (50) comprises means (66, 64, 70) for varying the HRS-damping level during the HRS-damping phase by varying the fluid (44) output, the relative axial position of the HRS-piston (70) with regards to the HRS-tube (52) determining the fluid (44) output throughout the fluid-exit means (64),
**characterized in that** the fluid inlet means (80) comprise at least one hole (80) and **in that** the HRS-piston (70) is slidably mounted on the rod (36) between a compression stop surface (87) and an extension stop surface (85) and **in that** when the shock absorber (20) is in the compression mode (MC) the HRS-piston (70) axially translates in abutment against the compression stop surface (87) which leaves the hole (80) open and when the shock absorber (20) is in the extension mode (ME) the HRS-piston (70) axially translates in abutment against the extension stop surface (85) which closes the hole (80), and
the HRS-piston (70) is further provided with an inner radial shoulder forming a recess (79) so that in the compression mode (MC) the HRS-piston (70) is in abutment against the compression stop surface (87) at the bottom of the recess (79).

2. A linear Hydraulic shock absorber (20) as set forth in claim 1 **characterized in that** said means (66) provide a continuous increase of the damping level during the HRS-damping phase.

3. A linear Hydraulic shock absorber (20) as set forth in any of the preceding claim **characterized in that** the fluid exit means (64) are arranged in the cylindrical wall (56) of the HRS-tube (52).

4. A linear Hydraulic shock absorber (20) as set forth in any of the preceding claim **characterized in that** the fluid exit means (64) are extending from the HRS-tube-in (60) toward the inside of the HRS-tube (52).

5. A linear Hydraulic shock absorber (20) as set forth in any of the preceding claim **characterized in that** the HRS (50) is further provided with fluid inlet means (80) being open so enabling the fluid (44) to transfer from the main chamber (38) to the inside of the HRS-tube (52) when the shock absorber (20) is in the compression mode (MC), and being closed so forbidding the fluid (44) to transfer from the main chamber (38) to the inside of the HRS-tube (52) when the shock absorber (20) is in the extension mode (ME).

6. A linear Hydraulic shock absorber (20) as set forth in claim 5 **characterized in that** the fluid inlet means (80) are in the HRS-piston (70).

7. A linear Hydraulic shock absorber (20) as set forth in any of the preceding claims in combination with claim 4 **characterized in that** the fluid-exit means (64) defines a cross section (68) through which the fluid (44) exits and that the cross section (68) varies axially.

8. A linear Hydraulic shock absorber (20) as set forth in any of the preceding claim **characterized in that** in the HRS-tube (52) comprises a tube-in portion and a bottom-end portion and the fluid-exit means (64) are being arranged only in the tube-in portion.

9. A linear Hydraulic shock absorber (20) as set forth in any of the preceding claim **characterized in** the HRS-tube-in (60) is provided with a chamfer (62).

10. A linear Hydraulic shock absorber (20) as set forth in any of the preceding claim **characterized in that** the fluid-exit means (64) comprises at least one groove (64) axially operated in the HRS-wall (54) and extending from the HRS-tube-in (60) toward the inside of the HRS-tube (52), the groove (64) having a larger cross section (68) by the HRS-tube-in (60) than further inside the HRS-tube (52).

11. A linear Hydraulic shock absorber (20) as set forth in any of the claim 1 to 10 **characterized in that** the fluid-exit (64) is an annular gap (96) between the HRS-tube-inner-surface (56) and the HRS-piston-outer surface (74) and **in that** the HRS-tube-inner-surface (56) is tapered and larger by the HRS-tube-in (60) thus varying the cross section (68) of the annular gap (96) as the HRS-piston (70) engages further inside the HRS-tube (52).

12. A linear Hydraulic shock absorber (20) as set forth in any of the claim 1 to 11 **characterized in that** there is a cavity (92) between the main tube (22) and the HRS-tube (52) the cavity (92) leading to the extension chamber (42) and **in that** the fluid exit means (64) comprise at least one through hole (94) operated in the HRS-wall (54) connecting the inside of the HRS-tube (52) to the cavity (92).

13. A linear Hydraulic shock absorber (20) as set forth in any of the preceding claim **characterized in that** the HRS-tube (52) is integral to the main tube (22).

## Patentansprüche

1. Ein linearer hydraulischer Stoßdämpfer (20), der ein Hauptrohr (22) aufweist, welches eine Hauptkammer (38) definiert, die mit einem Fluid (44) gefüllt ist, wobei ein Kolben (32) mit einer Stange (32) sich axial durch eine Ausdehnungsextremität (28) des Hauptrohrs (22) erstreckt, wobei der Kolben (32) verschiebbar in der Hauptkammer (38) befestigt ist und in einem Kompressionsmodus (MC) und in einem Ausdehnungsmodus (ME) zwischen einer axialen Vollausdehnungsposition (FE) und einer axialen Vollkompressionsposition (FC) arbeitet;
wobei der Stoßdämpfer (20) des Weiteren mit einem hydraulischen Ausfederungsanschlag (50), HRS (50) genannt, versehen ist, welcher in in dem Hauptrohr (22) platziert ist und aufweist:
ein HRS-Rohr (52), das an dem Hauptrohr (22) befestigt ist, wobei das HRS-Rohr (52) eine Wand (54) aufweist, die mit einer inneren Oberfläche (56) versehen ist, die innere HRS-Rohr-Oberfläche (56) genannt wird, und
einen HRS-Kolben (70), der an die innere HRS-Rohr-Oberfläche (56) angepasst ist und an der Stange (36) befestigt ist, so dass, wenn der Stoßdämpfer (20) in dem Ausdehnungsmodus (ME) ist und sich der Vollausdehnungsposition (FE) annähert, der HRS-Kolben (70) in das HRS-Rohr (52) über den HRS-Rohr-Ein (60) eintritt, um das Fluid (44) zwischen der Ausdehnungsextremität (58) des HRS-Rohrs (58) und dem HRS-Kolben (70) unter Druck zu setzen, wobei diese Phase höherer Kompression HRS-Dämpfungsphase genannt wird;
wobei der HRS (50) des Weiteren mit Fluid-Ausgangs-Mitteln (64) versehen ist, um für das Fluid (44), das innerhalb des HRS-Rohrs (52) unter Druck gesetzt ist, einen Weg aus der Hauptkammer (38) bereitzustellen,
wobei der HRS (50) Mittel (66, 64, 70) aufweist, um den HRS-Dämpfungspegel während der HRS-Dämpfungsphase zu variieren, indem die Fluid (44) -Ausgabe variiert wird, wobei die relative axiale Position des HRS-Kolbens (70) hinsichtlich des HRS-Rohrs (52) die Fluid (44)-Ausgabe durch die Fluid-Ausgangs-Mittel (64) hindurch bestimmt,
**dadurch gekennzeichnet, dass** die Fluid-Einlass-Mittel (80) zumindest eine Öffnung (80) aufweisen und dass der HRS-Kolben (70) verschiebbar auf der Stange (36) zwischen einer Kompressions-Anschlagsoberfläche (87) und einer Ausdehnungs-Anschlagsoberfläche (85) befestigt ist, und dadurch, dass, wenn der Stoßdämpfer (20) in dem Kompressionsmodus (MC) ist, der HRS-Kolben (70) axial in Angrenzung gegen die Kompressions-Anschlagsoberfläche (87) verschiebt, was die Öffnung (80) offen lässt, und, wenn der Stoßdämpfer (20) in dem Ausdehnungsmodus (ME) ist, der HRS-Kolben (70) axial in Angrenzung gegen die Ausdehnungs-Anschlagsoberfläche (87) verschiebt, was die Öffnung (80) schließt, und
der HRS-Kolben (70) des Weiteren mit einer inneren radialen Schulter versehen ist, die eine Vertiefung (79) bildet, so dass der HRS-Kolben (70) in dem Kompressionsmodus (MC) in Angrenzung gegen die Kompressions-Anschlagsoberfläche (87) an der Unterseite der Vertiefung (79) ist.

2. Ein linearer hydraulischer Stoßdämpfer (20) gemäß Anspruch 1, **dadurch gekennzeichnet, dass** die Mittel (66) eine kontinuierliche Erhöhung des Dämpfungspegels während der HRS-Dämpfungsphase bereitstellen.

3. Ein linearer hydraulischer Stoßdämpfer (20) gemäß einem der vorhergehenden Ansprüche, **dadurch gekennzeichnet, dass** die Fluid-Ausgangs-Mittel (64) in der zylindrischen Wand (56) des HRS-Rohrs (52) angeordnet sind.

4. Ein linearer hydraulischer Stoßdämpfer (20) gemäß einem der vorhergehenden Ansprüche, **dadurch gekennzeichnet, dass** die Fluid-Ausgangs-Mittel (64) sich von dem HRS-Rohr-Ein (60) hinwärts zu dem HRS-Rohr (52) erstrecken.

5. Ein linearer hydraulischer Stoßdämpfer (20) gemäß einem der vorhergehenden Ansprüche, **dadurch gekennzeichnet, dass** der HRS (50) des Weiteren mit Fluid-Einlass-Mitteln (80) versehen ist, die offen sind, um zu ermöglichen, dass das Fluid (44) von der Hauptkammer (38) zu dem Inneren des HRS-Rohrs (52) transferiert, wenn der Stoßdämpfer (20) in dem Kompressionsmodus (MC) ist, und die geschlossen sind, um es dem Fluid (44) nicht zu erlauben, von der Hauptkammer (38) zu dem Inneren des HRS-Rohrs (52) zu transferieren, wenn der Stoßdämpfer (20) in dem Ausdehnungsmodus (ME) ist.

6. Ein linearer hydraulischer Stoßdämpfer (20) gemäß Anspruch 5, **dadurch gekennzeichnet, dass** die Fluid-Einlass-Mittel (80) in dem HRS-Kolben (70) sind.

7. Ein linearer hydraulischer Stoßdämpfer (20) gemäß einem der vorhergehenden Ansprüche in Kombination mit Anspruch 4, **dadurch gekennzeichnet, dass** die Fluid-Ausgangs-Mittel (64) einen Querschnitt (68) definieren, durch den das Fluid (44) austritt, und dass der Querschnitt (68) axial variiert.

8. Ein linearer hydraulischer Stoßdämpfer (20) gemäß einem der vorhergehenden Ansprüche, **dadurch gekennzeichnet, dass** das HRS-Rohr (52) einen Rohr-Ein-Bereich und einen Unterseiten-End-Bereich aufweist und die Fluid-Ausgangsmittel (64) nur in dem Rohr-Ein-Bereich angeordnet sind.

9. Ein linearer hydraulischer Stoßdämpfer (20) gemäß einem der vorhergehenden Ansprüche, **dadurch gekennzeichnet, dass** der HRS-Rohr-Ein (60) mit einer Abschrägung (62) versehen ist.

10. Ein linearer hydraulischer Stoßdämpfer (20) gemäß einem der vorhergehenden Ansprüche, **dadurch gekennzeichnet, dass** die Fluid-Ausgangs-Mittel (64) zumindest eine Nut (64) aufweisen, die axial in der HRS-Wand (54) gearbeitet ist und sich von dem HRS-Rohr-Ein (60) hinwärts zu dem Inneren des HRS-Rohrs (52) erstreckt, wobei die Nut (64) einen größeren Querschnitt (68) bei dem HRS-Rohr-Ein (60) als weiter innerhalb des HRS-Rohrs (52) hat.

11. Ein linearer hydraulischer Stoßdämpfer (20) gemäß einem der Ansprüche 1 bis 10, **dadurch gekennzeichnet, dass** der Fluid-Ausgang (64) ein Ringspalt (96) zwischen der inneren HRS-Rohr-Oberfläche (56) und der äußeren HRS-Kolben-Oberfläche (74) ist und dass die innere HRS-Rohr-Oberfläche (56) sich verjüngend und größer bei dem HRS-Rohr-Ein (60) ist, wodurch der Querschnitt (68) des Ringspalts (96) variiert wird, wenn der HRS-Kolben (70) weiter innerhalb des HRS-Rohrs (52) eingreift.

12. Ein linearer hydraulischer Stoßdämpfer (20) gemäß einem der Ansprüche 1 bis 11, **dadurch gekennzeichnet, dass** es eine Kavität (92) zwischen dem Hauptrohr (22) und dem HRS-Rohr (52) gibt, wobei die Kavität (92) zu der Ausdehnungskammer (42) führt, und dass die Fluid-Ausgangs-Mittel (64) zumindest eine Durchgangsbohrung (94) aufweisen, die in der HRS-Wand (54) gearbeitet ist, die das Innere des HRS-Rohrs (52) mit der Kavität (92) verbindet.

13. Ein linearer hydraulischer Stoßdämpfer (20) gemäß einem der vorhergehenden Ansprüche, **dadurch gekennzeichnet, dass** das HRS-Rohr (52) integral mit dem Hauptrohr (22) ist.

## Revendications

1. Amortisseur hydraulique linéaire (20) comprenant un tube principal (22) définissant une chambre principale (38) remplie de fluide (44), un piston (32) et une tige (36) s'étendant axialement à travers une extrémité de l'extension (28) du tube principal (22), le piston (32) étant monté coulissant dans la chambre principale (38) et fonctionne dans un mode de compression (MC) et dans un mode d'extension (ME) entre une position de pleine extension axiale (FE) et une position de pleine compression axiale (FC),
l'amortisseur (20) étant muni, en outre, d'une butée de rebond hydraulique (50), appelée HRS (50), placée dans le tube principal (22) et comprenant:
un tube HRS (52) fixé au tube principal (22), le tube HRS (52) présentant une paroi (54) équipée d'une surface interne (56) appelée surface interne du tube HRS (56) et
un piston HRS (70) adapté à la surface interne du tube HRS (56) et monté sur la tige (36) de façon que, lorsque l'amortisseur (20) est en mode d'extension (ME) et s'approche la position de pleine extension (FE), le piston HRS (70) entre dans le tube HRS (52) via l'entrée du tube HRS (60) afin de mettre sous pression le fluide (44) entre l'extrémité d'extension (58) du tube HRS (52) et le piston HRS (70), cette phase de compression plus forte étant appelée phase d'amortissement HRS,
la butée de rebond hydraulique HRS (50) étant munie, en outre, de moyens de sortie de fluide (64) pour fournir au fluide (44) mis sous pression à l'intérieur du tube HRS (52) une voie de sortie vers la chambre principale (38),
dans lequel la butée de rebond hydraulique HRS (50) comprend des moyens (66, 64, 70) pour varier le niveau d'amortissement HRS durant la phase d'amortissement HRS en variant le débit de fluide (44), la position axiale relative du piston HRS (70) par rapport au tube HRS (52) déterminant le débit de fluide (44) à travers les moyens de sortie de fluide (64),
**caractérisé en ce que** les moyens d'entrée de fluide (80) comprennent au moins un trou (80) et **en ce que** le piston HRS (70) est monté coulissant sur la tige (36) entre une surface de butée de compression (87) et une surface de butée d'extension (85) et **en ce que**, lorsque l'amortisseur (20) est en mode de compression (MC), le piston HRS (70) se translate axialement en appui contre la surface de butée de compression (87) qui laisse le trou (80) ouvert et lorsque l'amortisseur (20) est en mode d'extension (ME), le piston HRS (70) se translate axialement en appui contre la surface de butée d'extension (85) qui ferme le trou (80), et
le piston HRS (70) est muni, en outre, d'une épaule radiale interne formant un creux (79) de manière qu'en mode de compression (MC), le piston HRS (70) est en appui contre la surface de butée de compression (87) au fond du creux (79).

2. Amortisseur hydraulique linéaire (20) suivant la revendication 1, **caractérisé en ce que** lesdits moyens (66) entraînent une augmentation continue du niveau d'amortissement durant la phase d'amortissement HRS.

3. Amortisseur hydraulique linéaire (20) suivant une quelconque des revendications précédentes, **caractérisé en ce que** les moyens de sortie de fluide (64) sont disposés dans la paroi cylindrique (56) du tube HRS (52).

4. Amortisseur hydraulique linéaire (20) suivant une quelconque des revendications précédentes, **caractérisé en ce que** les moyens de sortie de fluide (64) s'étendent depuis l'entrée du tube HRS (60) vers l'intérieur du tube HRS (52).

5. Amortisseur hydraulique linéaire (20) suivant une quelconque des revendications précédentes, **caractérisé en ce que** la butée de rebond hydraulique HRS (50) est munie, en outre, de moyens d'entrée de fluide (80) qui sont ouverts pour permettre au fluide (44) de passer de la chambre principale (38) à l'intérieur du tube HRS (52), lorsque l'amortisseur (20) est en mode de compression (MC) et qui sont fermés pour empêcher le fluide (44) de passer de la chambre principale (38) à l'intérieur du tube HRS (52), lorsque l'amortisseur (20) est en mode d'extension (ME).

6. Amortisseur hydraulique linéaire (20) suivant la revendication 5, **caractérisé en ce que** les moyens d'entrée de fluide (80) sont dans le piston HRS (70).

7. Amortisseur hydraulique linéaire (20) suivant une quelconque des revendications précédentes en combinaison avec la revendication 4, **caractérisé en ce que** le moyen de sortie de fluide (64) définit une section transversale (68) à travers laquelle le fluide (44) peut sortir et **en ce que** la section transversale (68) varie axialement.

8. Amortisseur hydraulique linéaire (20) suivant une quelconque des revendications précédentes, **caractérisé en ce que** le tube HRS (52) comprend une portion d'entrée de tube et une portion d'extrémité de fond et les moyens de sortie de fluide (64) sont disposés uniquement dans la portion d'entrée de tube.

9. Amortisseur hydraulique linéaire (20) suivant une quelconque des revendications précédentes, **caractérisé en ce que** l'entrée de tube HRS (60) est munie d'un chanfrein (62).

10. Amortisseur hydraulique linéaire (20) suivant une quelconque des revendications précédentes, **caractérisé en ce que** le moyen de sortie de fluide (64) comprend au moins une rainure (64) pratiquée axialement dans la paroi HRS (54) et s'étendant depuis l'entrée du tube HRS (60) vers l'intérieur du tube HRS (52), la rainure (64) présentant une section transversale (68) plus large au niveau de l'entrée du tube HRS (60) que plus loin à l'intérieur du tube HRS (52).

11. Amortisseur hydraulique linéaire (20) suivant une quelconque des revendications 1 à 10, **caractérisé en ce que** la sortie de fluide (64) est un espace vide annulaire (96) entre la surface interne du tube HRS (56) et la surface externe du piston HRS (74) et **en ce que** la surface interne du tube HRS (56) est conique et plus large au niveau de l'entrée du tube HRS (60), ce qui a pour effet une variation de la section transversale (68) de l'espace vide annulaire (96) lorsque le piston HRS (70) s'engage davantage à l'intérieur du tube HRS (52).

12. Amortisseur hydraulique linéaire (20) suivant une quelconque des revendications 1 à 11, **caractérisé en ce qu'**il y a une cavité (92) entre le tube principal (22) et le tube HRS (52), la cavité (92) menant à la chambre d'extension (42) et **en ce que** les moyens de sortie de fluide (64) comprennent au moins un trou traversant (94) pratiqué dans la paroi HRS (54) reliant l'intérieur du tube HRS (52) à la cavité (92).

13. Amortisseur hydraulique linéaire (20) suivant une quelconque des revendications précédentes, **caractérisé en ce que** le tube HRS (52) fait partie intégrante du tube principal (22).
